# FASCICULE DE BREVET EUROPEEN

(11) **EP 2 445 694 B1**
(45) Date de publication et mention de la délivrance du brevet: **18.02.2015**
(21) Numéro de dépôt: 10715289.4
(22) Date de dépôt: 04.03.2010
(51) Int. Cl.: B29C 33/30, B29C 45/26, B21D 37/04, B23Q 1/00, F16B 43/00

(54) **PERFECTIONNEMENT POUR OUTILLAGE**
VERBESSERUNG AN EINEM WERKZEUG
TOOL IMPROVEMENT

(30) Priorité: 23.04.2009 FR 0952646
(43) Date de publication de la demande: 02.05.2012
(73) Titulaire: Modetec, 74970 Marignier (FR)
(72) Inventeur: BIASI, Loris, F-74300 Cluses (FR)
(74) Mandataire: Gasquet, Denis
(86) Numéro de dépôt international: PCT/FR2010/050362
(87) Numéro de publication internationale: WO 2010/122248

(56) Documents cités:
- FR-A- 2 714 866
- US-A1- 2005 266 111

## Description

La présente invention concerne un perfectionnement pour outillage, destiné au domaine industriel pour la fabrication de pièces, comme par exemple de pièces destinées à la mécanique de précision, de pièces obtenues par emboutissage ou découpage ou de pièces réalisées en matière plastique. La réalisation de pièces est généralement faite grâce à un outillage constitué par une carcasse comprenant les éléments de production tels qu'outil de découpe, d'emboutissage ou d'empreinte de remplissage dans le cas d'un moule d'injection.

Selon les équipements traditionnels les cassettes sont fixées sur les carcasses grâce par exemple à un logement d'encastrement et des vis de fixation. Mais souvent la position de la cassette n'est pas parfaite, et le montage et le démontage doivent être réalisé avec un personnel qualifié et expérimenté qui est de plus en plus rare.

L'injection de pièces plastiques est un procédé connu et consiste à remplir une empreinte d'un moule de matière plastique à l'état liquide, et de l'éjecter après son injection par ouverture du moule.

Selon les équipements traditionnels, le moule qui comprend l'empreinte en creux est constitué par une carcasse volumineuse, montée sur la presse à injecter. La carcasse est fixée sur la presse à injectée, et est constituée de deux châssis dont chacun comprend une partie de l'empreinte (cavité de moulage) qui par coopération avec l'empreinte de l'autre châssis, forme le volume approprié de la cavité de moulage destinée à être remplie par le plastique à l'état liquide.

Les châssis comprenant les empreintes sont donc des pièces généralement lourdes et uniques que l'utilisateur doit démonter, pour changer de cavité de moulage ou pour réparer et/ou entretenir. L'opération de démontage est donc une opération délicate et coûteuse, puisque l'ensemble des deux châssis sont à démonter. Ce type d'intervention vue sa difficulté doit être faite avec un personnel qualifié et expérimenté qui est de plus en plus rare.

On connaît par la divulgation faite par le brevet US 2005/266111, un outillage pour la fabrication de pièces industrielles, constitué par un châssis sur lequel est fixée de façon amovible une cassette constituant l'outillage proprement dit, tel que la cassette comprend des colonnes de centrage, destinées à être engagées dans des trous de réception correspondants réalisés sur la face avant du châssis.

L'invention se propose de remédier aux inconvénients cités précédemment en proposant un dispositif particulièrement simple.

Ainsi, selon l'invention l'outillage pour la fabrication de pièces industrielles, est constitué par une carcasse constitué par un châssis sur lequel est fixée de façon amovible une cassette, ladite cassette constituant l'outillage proprement dit, caractérisé en ce que la cassette comprend des colonnes de centrage, destinées à être engagées dans des trous de réception correspondants réalisés sur la face avant du châssis, et en ce que les colonnes de centrage comprennent une saillie périphérique conique destinée à venir en contact avec une partie rayonnée correspondante réalisée sur la face de réception d'une rondelle de centrage déformable disposée à l'entrée des trous de réception, tandis que les trous de réception des colonnes de centrage ont un diamètre légèrement supérieur au diamètre des colonnes de centrage, et ce afin de réaliser une position parfaite de la cassette sur son châssis.

Selon une caractéristique complémentaire la cassette est fixée sur la face avant du châssis correspondant grâce à un ensemble de vis de fixation.

Selon une autre caractéristique complémentaire chacune des rondelles de centrage déformable est disposée à l'entrée du trou de guidage correspondant, tandis qu'il est prévu un dégagement arrière permettant la déformation de la rondelle.

Selon un mode d'exécution donné à titre d'exemple, l'outillage est destiné à la fabrication de pièces en matière plastique obtenue par injection dans une empreinte d'un moule, d'une matière plastique se présentant à l'état fluide, l'empreinte destinée à être remplie de matière plastique à l'état fluide par une buse d'injection, étant en deux parties et formée par deux sous-ensembles, chacun de ces sous-ensembles comportant une partie de l'empreinte, l'un des sous-ensembles étant fixé sur la presse à injecter, de façon à ce que l'empreinte soit en communication avec la buse d'injection, tandis que l'autre des sous-ensembles est mobile par rapport au premier sous-ensemble, pour permettre la libération et ainsi l'éjection des pièces injectées, après refroidissement au moins partiel de la ou des pièces injectées, caractérisé en ce que l'un au moins des sous-ensembles, est constitué par un châssis sur lequel est fixé de façon amovible une cassette, cette dernière comprenant sur sa face avant une partie de l'empreinte.

Ajoutons que les colonnes de centrage des cassettes fixées sur le châssis du sous-ensemble fixe, font saillie vers l'arrière, par un prolongement arrière pour être engagées dans les trous de centrage mais se prolongent pour faire saillie vers l'avant, par un prolongement avant destiné à être engagé dans des trous correspondants de centrage réalisés dans la cassette correspondante fixées sur l'autre châssis.

D'autres caractéristiques et avantages de l'invention se dégageront de la description qui va suivre en regard des dessins annexés qui ne sont donnés qu'à titre d'exemples non limitatifs.

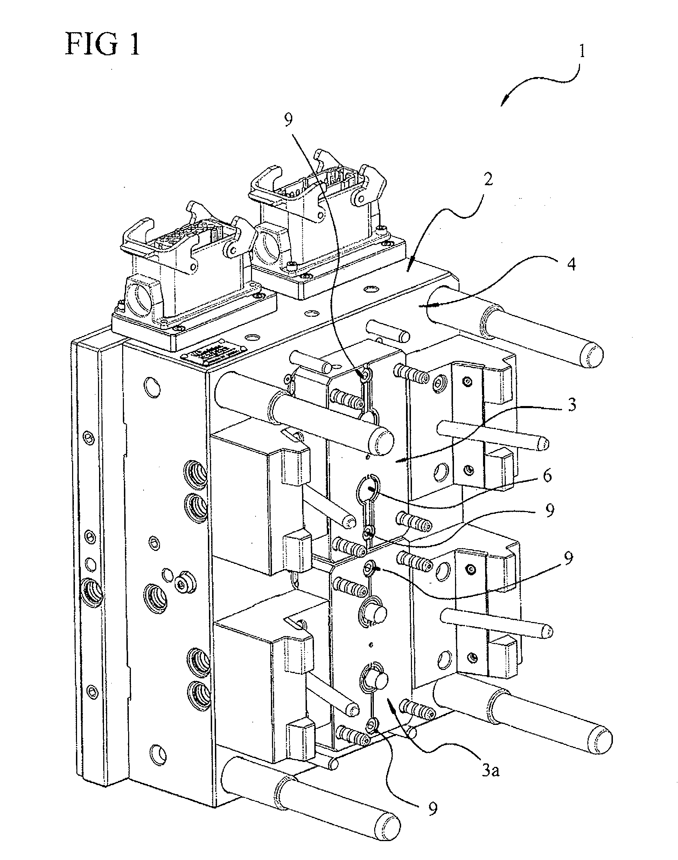

La figure 1 représente en perspective l'un des sous-ensembles avec son châssis comprenant ses cassettes.

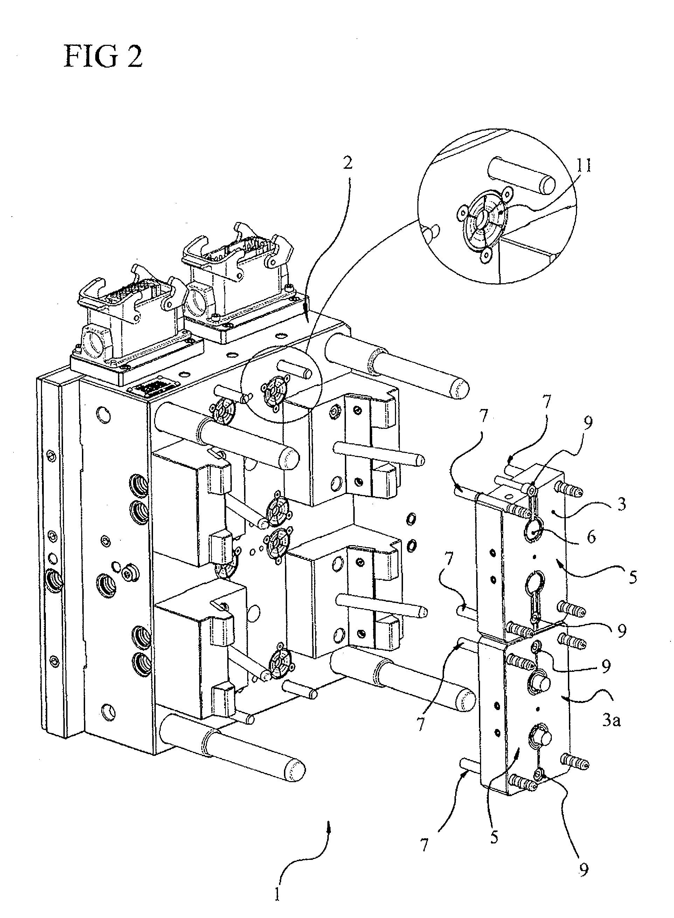

La figure 2 représente en perspective l'un des sous-ensembles avec son châssis avec ses cassettes, mais avant son montage.

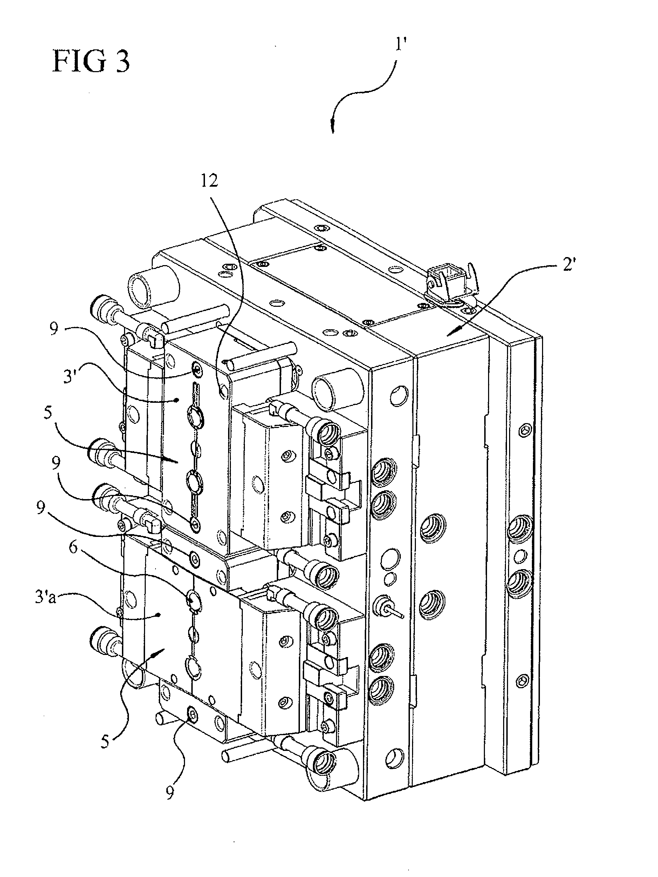

La figure 3 représente en perspective l'autre des sous-ensembles avec son châssis comprenant ses cassettes.

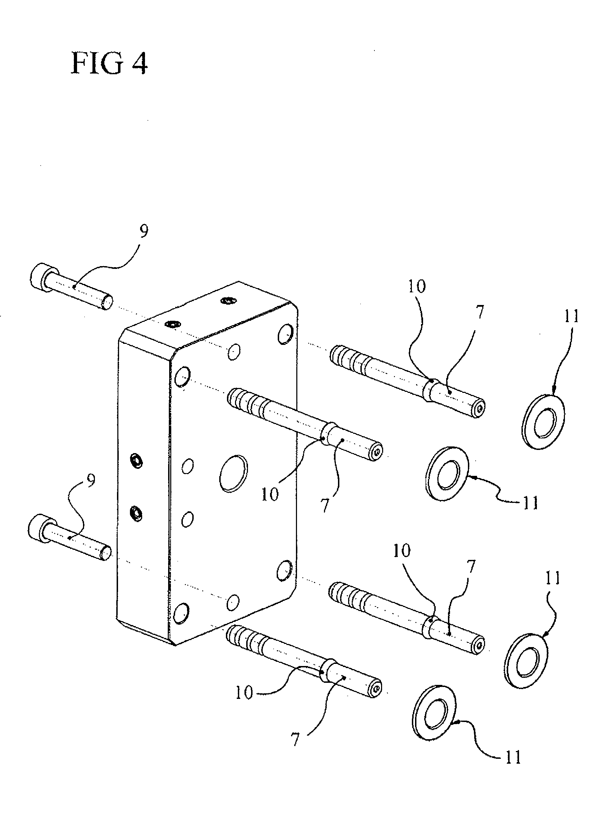

La figure 4 est une vue en perspective montrant une des cassettes les vis de fixation et les colonnes de centrage étant retirées.

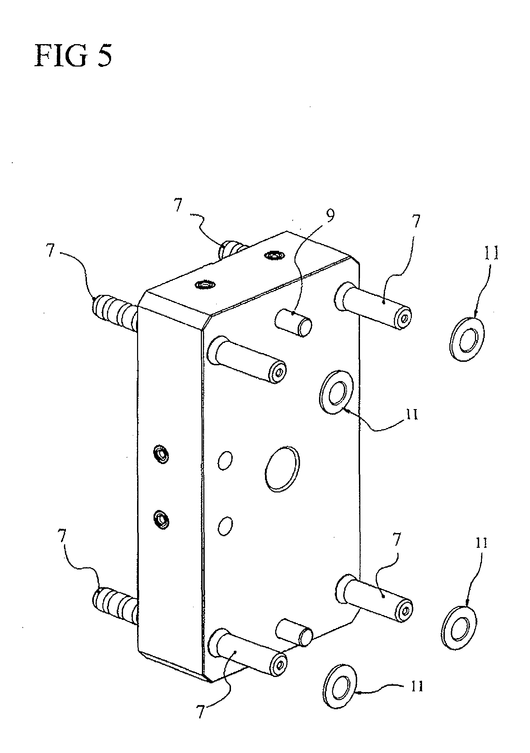

La figure 5 est une vue en perspective montrant une des cassettes, les vis de fixation et les colonnes de centrage étant mises en place.

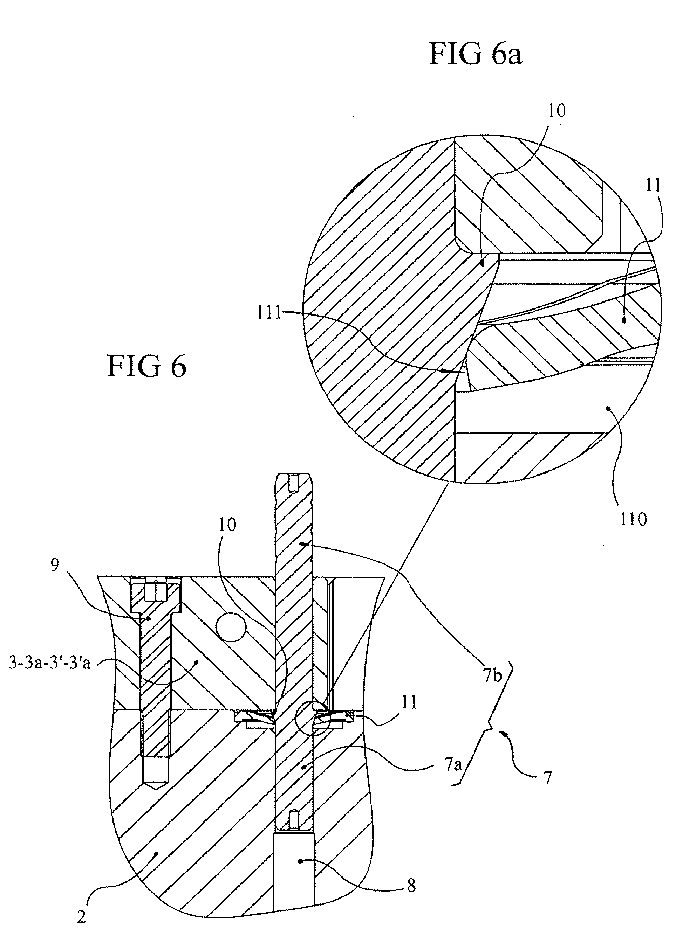

La figure 6 étant une illustration montrant un détail d'exécution Avec une vue agrandie en figure 6a

Le dispositif de l'invention qui sera décrit à titre d'exemple est un outillage pour la fabrication de pièces en matière plastique obtenue par injection dans une empreinte d'un moule, d'une matière plastique se présentant à l'état fluide. Cet outillage est destiné à être monté sur une presse à injecter.

Bien entendu si l'invention telle que décrite est particulièrement bien adaptée pour un outillage d'injection, ce domaine d'application n'est pas exclusif et l'invention peut être utilisée pour d'autres applications telles que destinées au domaine industriel en général pour la fabrication de pièces, comme par exemple de pièces destinées à la mécanique de précision, machines spéciales, de pièces obtenues par emboutissage ou découpage ou de pièces réalisées en matière plastique.

Selon l'application qui est donné par la suite de la description, à titre d'exemple, l'empreinte destinée à être remplie de matière plastique à l'état fluide par une buse d'injection, est en deux parties, et formée par deux sous-ensembles (1, 1'), chacun de ces sous-ensembles (1, 1') comportant une partie de l'empreinte (6), l'un des sous-ensembles (1) étant fixé sur la presse à injecter, de façon à ce que l'empreinte soit en communication avec la buse d'injection, tandis que l'autre des sous-ensembles (1') est mobile par rapport au premier sous-ensemble, pour permettre la libération et ainsi l'éjection des pièces injectées, après refroidissement au moins partiel de la ou des pièces injectées.

L'un au moins des sous-ensembles, mais avantageusement les deux, est ou sont constitué(s) par un châssis (2, 2') qui porte, selon l'invention une pièce amovible que l'on appellera "cassette" (3, 3a - 3', 3'a).

Le châssis (2) est une pièce volumique de grandes dimensions, tandis que la cassette (3, 3a - 3', 3'a) est une pièce volumique de plus petites dimensions qui est fixée sur la face avant (4) du châssis correspondant.

C'est la face avant (5) de la cassette (3, 3a) qui comprend une partie de l'empreinte, tandis que la face avant (5) de l'autre cassette (3', 3'a) qui est fixée sur l'autre châssis comprend la forme complémentaire de l'empreinte. C'est après fermeture du moule que le volume à injecter est réalisé prêt à recevoir la matière plastique fluide distribuée par la buse d'injection.

Selon le mode de réalisation illustré à titre d'exemple chacun des châssis comprend deux cassettes respectivement (3,3a- 3', 3'a)

Comme nous l'avons précisé, les cassettes (3, 3a- 3', 3'a) sont amovibles par rapport au châssis (2) pour pouvoir être retirées facilement du châssis. C'est donc une pièce démontable par rapport au châssis, et est indépendante du châssis.

Afin de faciliter la mise en place avant fixation sur la carcasse de la cassette avec de la buse d'injection, ainsi qu'avec l'autre cassette (dans le cas d'une presse à injectée) chacune des cassettes comprend des colonnes de centrage (7), destinées à être engagées dans des trous de réception (8) correspondants réalisés sur la face avant (4) du châssis (2).

Notons que la cassette (3, 3a - 3', 3'a) est fixée sur la face avant (4) du châssis correspondant grâce par exemple par un ensemble de vis de fixation (9).

Par ailleurs afin de réaliser un positionnement parfait de la cassette les colonnes de centrage (7) comprennent une saillie périphérique conique (10) destinée à venir en contact avec une partie rayonnée (111) correspondante réalisée sur la face de réception d'une rondelle de centrage déformable (11) disposée à l'entrée des trous de réception. Par ailleurs les trous de réception (8) des colonnes de centrage ont un diamètre légèrement supérieur au diamètre des colonnes de centrage.

On notera que chacune des rondelles de centrage déformable (11) est disposée à l'entrée du trou de réception correspondant (8), tandis qu'il est prévu un dégagement arrière (110) tel qu'un lamage, permettant la déformation de la rondelle.

Ajoutons que les colonnes de centrage (7) des cassettes (3, 3a) fixées sur le châssis (2) du sous-ensemble (1) fixe, font saillie vers l'arrière, par un prolongement arrière (7a) pour être engagées dans les trous de réception (8) mais peuvent ou non se prolonger pour faire saillie vers l'avant, par un prolongement avant (7b) destiné à être engagé dans des trous correspondants de centrage (12) réalisés dans la cassette correspondante (3', 3'a) fixée sur l'autre châssis (2').

De ce qui précède, on a compris que la cassette constitue l'outillage proprement dit, pour réaliser les pièces industrielles, tandis que le châssis constitue le support de cassette.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Outillage pour la fabrication de pièces industrielles, constitué par une carcasse (1, 1') constituée par un châssis (2, 2') sur lequel est fixée de façon amovible une cassette (3, 3a - 3', 3'a) ladite cassette constituant l'outillage proprement dit, la cassette (3, 3a - 3', 3'a) comprenant des colonnes de centrage (7), destinées à être engagées dans des trous de réception (8) correspondants réalisés sur la face avant (4) du châssis (2), **caractérisé en ce que** les colonnes de centrage (7) comprennent une saillie périphérique conique (10) destinée à venir en contact avec une partie rayonnée (111) correspondante réalisée sur la face de réception d'une rondelle de centrage déformable (11) disposée à l'entrée des trous de réception, tandis que les trous de réception (8) des colonnes de centrage ont un diamètre légèrement supérieur au diamètre des colonnes de centrage, et ce afin de réaliser une position parfaite de la cassette sur son châssis.

2. Outillage de fabrication selon la revendication 1, **caractérisé en ce que** la cassette (3, 3a - 3', 3'a) est fixée sur la face avant (4) du châssis correspondant grâce à un ensemble de vis de fixation (9).

3. Outillage de fabrication selon l'une quelconque des revendications précédentes, **caractérisé en ce que** chacune des rondelles de centrage déformable (11) est disposée à l'entrée du trou de réception correspondant (8), tandis qu'il est prévu un dégagement arrière (110) permettant la déformation de la rondelle.

4. Outillage de fabrication selon l'une quelconque des revendications précédente, **caractérisé en ce que** l'outillage est destiné à la fabrication de pièces en matière plastique obtenue par injection dans une empreinte d'un moule, d'une matière plastique se présentant à l'état fluide, l'empreinte destinée à être remplie de matière plastique à l'état fluide par une buse d'injection, étant en deux parties et formée par deux sous-ensembles (1, 1'), chacun de ces sous-ensembles (1, 1') comportant une partie de l'empreinte (6), l'un des sous-ensembles (1) étant fixé sur la presse à injecter, de façon à ce que l'empreinte soit en communication avec la buse d'injection, tandis que l'autre des sous-ensembles (1') est mobile par rapport au premier sous-ensemble, pour permettre la libération et ainsi l'éjection des pièces injectées, après refroidissement au moins partiel de la ou des pièces injectées, **caractérisé en ce que** l'un au moins des sous-ensembles, est constitué par un châssis (2) sur lequel est fixé de façon amovible une cassette (3, 3a - 3', 3'a), cette dernière comprenant sur sa face avant (5) une partie de l'empreinte.

5. Outillage de fabrication selon la revendication précédente, **caractérisé en ce que** les colonnes de centrage (7) des cassettes (3, 3a) fixées sur le châssis (2) du sous-ensemble (1) fixe, font saille vers l'arrière, par un prolongement arrière (7a) pour être engagées dans les trous de réception (8) mais se prolongent pour faire saillie vers l'avant, par un prolongement avant (7b) destiné à être engagé dans des trous correspondants de centrage (12) réalisés dans la cassette correspondante (3', 3'a) fixés sur l'autre châssis (2').

## Patentansprüche

1. Werkzeug zur Herstellung von Industrieverkstücken bestehend aus einem Gehäuse (1, 1'), welches aus einem Chassis (2, 2') besteht, an dem eine Kassette (3, 3a - 3', 3'a) abnehmbar befestigt ist, wobei die Kassette das eigentliche Werkzeug bildet, wobei die Kassette Zentriersäulen (7) zur Einführung in entsprechende, auf der Vorderseite (4) des Chassis ausgebildete Aufnahmelöcher (8) umfasst, **dadurch gekennzeichnet, dass** die Zentriersäulen (7) einen umlaufenden, konischen Vorsprung (10) umfassen, der bestimmt ist, mit einem entsprechenden radialen Abschnitt (111) in Kontakt zu kommen, welcher auf der Aufnahmeseite einer verformbaren Zentrierscheibe (11) ausgeführt ist, die am Eingang des Aufnahmelöcher angeordnet ist, während die Aufnahmelöcher (8) der Zentriersäulen einen geringfügig größeren Durchmesser als die Zentriersäulen aufweisen, um eine perfekte Positionierung der Kassette auf dem Chassis zu erzielen.

2. Herstellungswerkzeug nach Anspruch 1, **dadurch gekennzeichnet, dass** die Kassette (3, 3a - 3', 3'a) an der Vorderseite (4) des entsprechenden Chassis anhand eines Satzes von Befestigungsschrauben (9) befestigt ist.

3. Herstellungswerkzeug nach einem der vorhergehenden Ansprüche, **dadurch gekennzeichnet, dass** jede der verformbaren Zentrierscheiben (11) am Eingang zum entsprechenden Aufnahmeloch (8) angeordnet ist, wobei eine hintere Ausnehmung (110) vorgesehen ist, die eine Verformung der Scheibe erlaubt.

4. Herstellungswerkzeug nach einem der vorhergehenden Ansprüche, **dadurch gekennzeichnet, dass** das Werkzeug zur Herstellung von Kunststoffteilen durch Einspritzen eines flüssigen Kunststoffs in den Hohlraum einer Form bestimmt ist, wobei der mit flüssigem Kunststoff über eine Einspritzdüse auszufüllende Hohlraum aus zwei Teilen besteht und durch zwei Teileinheiten (1, 1') gebildet wird, wobei jede Teileinheit (1, 1') eine Teil des Hohlraums (6) aufweist, wobei eine der Teileinheiten (1) an der Spritzgusspresse derart befestigt ist, dass der Hohlraum mit der Einspritzdüse verbunden ist, während die andere Teileinheit (1') relativ zur ersten Teileinheit beweglich ist, um nach zumindest teilweiser Abkühlung des eingespritzten Teils oder der eingespritzten Teile die Freigabe und damit den Auswurf der eingespritzten Teile zu erlauben, **dadurch gekennzeichnet, dass** mindestens eine der Teileinheiten aus einem Chassis (2) besteht, an dem eine Kassette (3, 3'a - 3', 3'a) abnehmbar befestigt ist, wobei letztere an ihrer Vorderseite (5) einen Teil des Hohlraums aufweist.

5. Herstellungswerkzeug nach vorhergehendem Anspruch **dadurch gekennzeichnet, dass** die Zentriersäulen (7) der an dem Chassis (2) der festen Teileinheit (1) befestigten Kassetten (3, 3'a) mit einem hinteren Fortsatz (7a) nach hinten überstehen, um in die Aufnahmelöcher (8) eingeführt zu werden, und mit einem vorderen Fortsatz (7b) nach vorne überstehen, der vorgesehen ist, um in entsprechende Zentrierlöcher (12), die in der entsprechenden Kassette (3, 3'a) ausgebildet sind eingeführt zu werden, die an dem anderen Chassis (2') befestigt sind.

## Claims

1. Tool for the production of industrial parts, constituted by a housing (1,1') constituted by a frame (2,2') to which is removably fixed a cassette (3, 3a - 3', 3'a), said cassette constituting the actual tool, the cassette (3, 3a - 3', 3'a) comprising centring columns (7), intended to be engaged in corresponding receiving holes (8) made on the front face (4) of the frame, **characterised in that** the centring columns (7) comprise a conical peripheral projection (10) intended to come into contact with a corresponding radiused part (111) formed on the receiving face of a deformable centring washer (11) arranged at the entrance of the receiving holes, while the receiving holes (8) of the centring columns have a diameter slightly greater than the diameter of the centring columns, so as to achieve a perfect position of the cassette on its frame.

2. Production tool according to Claim 1, **characterised in that** the cassette (3, 3a - 3', 3'a) is fixed to the front face (4) of the corresponding frame by means of a set of fixing screws (9).

3. Production tool according to any one of the preceding claims, **characterised in that** each of the deformable centring washers (11) is arranged at the entrance of the corresponding receiving hole (8), while there is provided a rear clearance (110) allowing the deformation of the washer.

4. Production tool according to any one of the preceding claims, **characterised in that** the tool is intended for the production of parts made of plastic material obtained by injecting into a cavity of a mould a plastic material in the fluid state, the cavity intended to be filled with plastic material in the fluid state by an injection nozzle, being in two parts and formed by two subassemblies (1, 1'), each of these subassemblies (1, 1') comprising one part of the cavity (6), one of the subassemblies (1) being fixed to the injection moulding machine, so that the cavity is in communication with the injection nozzle, while the other of the subassemblies (1') is movable relative to the first subassembly, to allow the release and thus the ejection of the injection moulded parts, after at least partial cooling of the injection moulded part(s), **characterised in that** at least one of the subassemblies is constituted by a frame (2) to which is removably fixed a cassette (3, 3a - 3', 3'a), the latter comprising on its front face (5) a part of the cavity.

5. Production tool according to the preceding claim, **characterised in that** the centring columns (7) of the cassettes (3, 3a) fixed to the frame (2) of the fixed subassembly (1) project rearwards, by a rear extension (7a), to be engaged in the receiving holes (8) but extend to project forwards by a front extension (7b) intended to be engaged in corresponding centring holes (12) made in the corresponding cassette (3', 3'a) fixed to the other frame (2').
